# EUROPEAN PATENT APPLICATION

(11) **EP 1 505 811 A1**
(43) Date of publication of application: **09.02.2005**
(21) Application number: 04018025.9
(22) Date of filing: 29.07.2004
(51) Int. Cl.: H04M 1/725

(54) **Portable information terminal and operation mode determination system**

(30) Priority: 05.08.2003 JP 2003286751
(71) Applicant: NEC CORPORATION, Tokyo (JP)
(72) Inventor: Tokudome, Hirofumi, Minato-ku Tokyo (JP)
(74) Representative: Glawe. Delfs. Moll

(57) **Abstract**

A portable information terminal (1) operates in one of a plurality of operation modes. The portable information terminal (1) includes operation mode determination means (300) that determines an operation mode from the plurality of operation modes using one of a plurality of conditions, which vary according to the status in which the portable information terminal (1) is placed, as the determination condition. The operation mode determination means (300) determines the operation mode from the plurality of operation modes using one of the plurality of conditions as the determination condition in order of priority and, if the operation mode cannot be determined by a higher priority condition, using a next lower priority condition as the determination condition.

The plurality of conditions are conditions that can vary according to positional or temporal status.

Additionally short-range wireless communication capabilities (for instance Bluetooth) are provided for communicating with external devices.

## Description

### FIELD OF THE INVENTION

The present invention relates to a portable (mobile) information terminal and its operation mode determination system.

### BACKGROUND OF THE INVENTION

Several standby modes are prepared for a portable information terminal, such as a cellular phone, considering the situation in which a call comes in. The standby modes currently available for use include a normal mode, a drive mode, a message mode, and a silent mode. In the normal mode, a normal operation is performed to receive an incoming call. In the drive mode, a guidance message saying that "Cannot answer phone while driving" is returned to a sender at a call reception time. In the message mode (also referred to as a voice mail mode or phone-answering mode), the voice mail service center receives a message from the sender on behalf of the receiver. In the silent mode, no ring tone sounds when a call comes in.

In general, setting the standby mode to one of those modes requires the user to perform operation. However, the user finds it cumbersome to frequently switch the standby mode according to the situation and, in addition, the failure to switch the standby mode sometimes generates a problem.

An example of a prior art dealing with this problem is that a keyless door lock function of a car is installed in a cellular phone. According to this prior art, a standby mode is set to a drive mode when a door lock OFF operation is performed via the cellular phone while the drive mode is reset when a door lock ON operation is performed via the cellular phone (For example, see Patent Document 1).

More specifically, the art disclosed in Patent Document 1 is that both the cellular phone and a door lock mechanism of the car have infrared data communication means. In response to the door lock OFF or door lock ON operation signal from the infrared data communication means of the cellular phone, the door lock mechanism executes the door lock OFF operation or the door lock ON operation. Upon completion of any of those operations, the infrared data communication means of the door lock mechanism sends a signal to the cellular phone to inform that the operation has completed (The door lock OFF operation or the door lock ON operation has completed). In response to this signal, the cellular phone sets the standby mode to the drive mode when the door lock OFF operation is completed or resets the drive mode when the door lock ON operation is completed.

According to this art, the cellular phone automatically sets the standby mode when the infrared data communication means performs the door lock OFF operation or the door lock ON operation. This eliminates the need for the user to switch the standby mode and therefore reduces the user's load.

Patent Document 1 also discloses an art that detects the mounting or removal of a cellular phone on or from the in-vehicle cradle and, when the cellular phone is placed on the in-vehicle cradle, the drive mode is reset. A still another art disclosed in Patent Document 1 is that the drive mode is set or reset according to the gear position of the car or the number of engine rotations.

Another example of the prior art dealing with this problem is that clocking means for measuring the time of day or the period of time is provided. When the clocking means finds that a predetermined time of day has arrived or a predetermined length of the period of time has elapsed during the operation of one of a plurality of operation modes, the operation mode is switched to another operation mode (For example, see Patent Document 2). According to this art, the standby mode of the cellular phone is automatically switched when the predetermined time of day has arrived or the predetermined period of time has elapsed. This eliminates the need for the user to switch the standby mode and therefore reduces the user's load.
[Patent Document 1]
   Japanese Patent Kokai Publication No. JP-P2000-91980A (page 2, page 8)
[Patent Document 2]
   Japanese Patent Kokai Publication No. JP-P2001-45570A (page 2)

### SUMMARY OF THE DISCLOSURE

However, the art disclosed in Patent Document 1 described above uses information on the car as a condition for determining the standby mode; for example, information on "whether or not the infrared data communication means of the cellular phone performed the door lock OFF operation or the door lock ON operation", information on "whether or not the cellular phone is placed on the in-vehicle cradle", information on "whether the gear of the car is in the parking position", or information on "whether the number of engine rotations of the car has reached a predetermined value". Because only at least one of those conditions is used as the condition for determination at a time, the standby mode cannot be determined appropriately according to a complicated situation. That is, because the mode is switched to the normal mode when the user gets out of the car, an inconvenient condition sometimes occurs in which a call receiving operation is performed in the normal mode even if the user cannot answer the phone immediately, for example, when the user gets out of the car and when the user leaves the cellular phone.

The art disclosed in Patent Document 1 switches the standby mode of a cellular phone when the user performs the door lock OFF operation or the door lock ON operation via the infrared data communication means. Therefore, the standby mode of the cellular phone is not switched automatically when the user opens or closes the door lock, not via the infrared data communication means, but manually with the use of the door key. That is, an inconvenient condition occurs when the user with a cellular phone rides in the car and starts driving, because the standby mode of the cellular phone still remains in the normal mode.

The method for resetting the drive mode upon detecting that a cellular phone is placed on the in-vehicle cradle or the method for setting or resetting the drive mode according to the gear position or the number of rotations of the engine when a cellular phone is placed on the in-vehicle cradle also requires the user to perform the operation of "placing a cellular phone on the in-vehicle cradle". Therefore, this method also generates an inconvenient condition in which the standby mode switching operation is not performed at all simply because the user carries a cellular phone. That is, the problem with the art disclosed in Patent Document 1 is that, though the direct operation is not necessary for setting the standby mode, the standby mode cannot be switched unless the user positively performs the indirect operation; for example, the user must perform the door lock OFF operation or the door lock ON operation via the infrared data communication means, or must place a cellular phone on the in-vehicle cradle.

The art disclosed in Patent Document 2 described above switches the operation mode when the clocking means detects that a predetermined time of day has arrived or measures a predetermined period of time regardless of any other conditions that may occur. Therefore, once the user specifies that the standby mode be switched to the silent mode when the bedtime that is set arrives, the mode is switched automatically to the silent mode when the bedtime arrives even if the user is still awake. Therefore, an inconvenient condition may occur because the user fails to respond to an incoming call even when the user intends to answer the call. That is, the art disclosed in Patent Document 2 also cannot determine the standby mode appropriately according to a complicated situation.

A still another problem with the art disclosed in both Patent Document 1 and Patent Document 2 described above is that, because the standby mode determination condition (what standby modes should be activated under which condition) is fixed and cannot be changed, the art cannot perform proper operation when the user-requested determination condition is changed.

The present invention seeks to solve the problems associated with the prior art described above. It is an object of the present invention to provide a portable information terminal and an operation mode determination system thereof that can determine the operation mode of the standby mode appropriately according to a complicated situation of the portable information terminal, that can determine an operation mode without requiring the user to take a positive action, and that can preferably perform operation when a user requested determination condition changes.

According to an aspect of the present invention, there is provided a portable information terminal, which operates in one of a plurality of operation modes. The portable information terminal comprises operation mode determination means for determining the operation mode from a plurality of operation modes using one of a plurality of conditions, which vary according to the status of the portable information terminal, as a determination condition. The operation mode determination means determines the operation mode from the plurality of operation modes using one of the plurality of conditions as the determination condition in order of priority and, if the operation mode cannot be determined by a higher priority condition, using a next lower priority condition as the determination condition.

In the portable information terminal of the present invention, it is preferable that the plurality of conditions be conditions that vary according to positional or temporal status.

In this case, it is preferable that whether or not the portable information terminal is in a position where short-range wireless communication can be performed with some other device be at least one of the plurality of conditions.

In this case, it is also preferable that the operation status of some other device positioned in a range where the portable information terminal can perform short-range wireless communication be at least one of the plurality of conditions.

In the portable information terminal of the present invention, it is preferable that the other device be a plurality of devices.

In the portable information terminal of the present invention, it is preferable that the other device include a device installed in a vehicle.

In the portable information terminal of the present invention, it is also preferable that the other device include an ornamental article.

In this case, the ornamental article is preferably a wristwatch.

In the portable information terminal of the present invention, it is also preferable that the other device include a home electric appliance.

In this case, the home electric appliance is preferably a lighting system.

In this case, whether or not the operation status of the lighting system is on is preferably at least one of the plurality of conditions.

It is also preferable that the portable information terminal of the present invention further comprise clocking means for measuring a time of day or a period of time wherein whether or not the clocking means measures a predetermined time of day or a predetermined period of time is at least one of the plurality of conditions.

In the portable information terminal of the present invention, it is preferable that a user can set the plurality of conditions.

In the portable information terminal of the present invention, it is also preferable that a user can set the priority.

A portable information terminal of the present invention, which operates in one of a plurality of operation modes, comprises operation mode determination means for intermittently determining whether or not the portable information terminal is positioned in a range where short-range wireless communication can be performed with some other device and, based on the determination result, determining the operation mode from the plurality of operation modes.

In the portable information terminal of the present invention, it is preferable that a user can specify the other device.

In the portable information terminal of the present invention, it is preferable that the plurality of operation modes include a plurality of standby modes and that the operation mode determination means comprise standby mode determination means for determining the standby mode from the plurality of standby modes.

For example, the portable information terminal of the present invention is preferably a cellular phone.

An operation mode determination system of the present invention, which is a system for determining the operation mode of a portable information terminal operating in one of a plurality of operation modes, comprises the portable information terminal according to the present invention; and a device that can perform short-range wireless communication with the portable information terminal.

In another aspect, there is provided an operation mode determination system of the present invention, that is, a system for determining an operation mode of a portable information terminal operating in one of a plurality of operation modes, comprising the portable information terminal according to the firs aspect of the present invention; and a device that can perform short-range wireless communication with the portable information terminal, wherein the device can send information on the operation status of the device to the portable information terminal.

The meritorious effects of the present invention are summarized as follows.
In accordance with the present invention, the portable information terminal comprises the operation mode determination means for determining the operation mode from the plurality of operation modes using one of a plurality of conditions, which vary according to the status of the portable information terminal, as a determination condition, wherein the operation mode determination means determines the operation mode from the plurality of operation modes using one of the plurality of conditions as the determination condition in order of priority and, if the operation mode cannot be determined by a higher priority condition, using a next lower priority condition as the determination condition. Therefore, the operation mode such as the standby mode can be determined appropriately according to a complicated situation.

More specifically, the operation mode is determined using determination conditions such as whether or not the portable information terminal is in a position where short-range wireless communication can be performed with some other device, the operation status of some other device positioned in a range where the portable information terminal can perform short-range wireless communication, and whether or not the clocking means measures a predetermined time of day or a predetermined period of time. Therefore, the operation mode can be determined without requiring the user to take any positive action.

In accordance with the present invention, the portable information terminal, alternatively, comprises the operation mode determination means for intermittently determining whether or not the portable information terminal is positioned in a range where short-range wireless communication can be performed with some other device and, based on the determination result, determining the operation mode from the plurality of operation modes. Therefore, the operation mode can be determined without requiring the user to take any positive action.

In accordance with the present invention, the user can set a plurality of conditions that are used as the determination condition, set the priorities of those plurality of conditions, or specify other devices with which short-range wireless communication is to be performed. Therefore, the system is compatible even when a user-requested "operation mode determination condition (that will be used as determination condition)" changes.

### BRIEF DESCRIPTION OF THE DRAWINGS

FIG. 1 is a block diagram showing a cellular phone in an embodiment of the present invention.
FIG. 2 is a block diagram showing an operation mode determination system of the present invention.
FIG. 3 is a block diagram showing the configuration of the functions of the cellular phone.
FIG. 4 is a diagram showing an example of a standby mode policy that is entered.
FIG. 5 is a flowchart showing the processing of a standby mode determination unit when the standby mode policy shown in FIG. 4 is used.
FIG. 6 is a diagram showing another example of a standby mode policy that is entered.
FIG. 7 is a flowchart showing the processing of the standby mode determination unit when the standby mode policy shown in FIG. 6 is used.

### PREFERRED EMBODIMENTS OF THE INVENTION

An embodiment of the present invention will be described below with reference to the drawings. In this embodiment, a cellular phone that is an example of a portable information terminal according to the present invention and its operation mode determination system will be described.

A preferred embodiment will be described below.

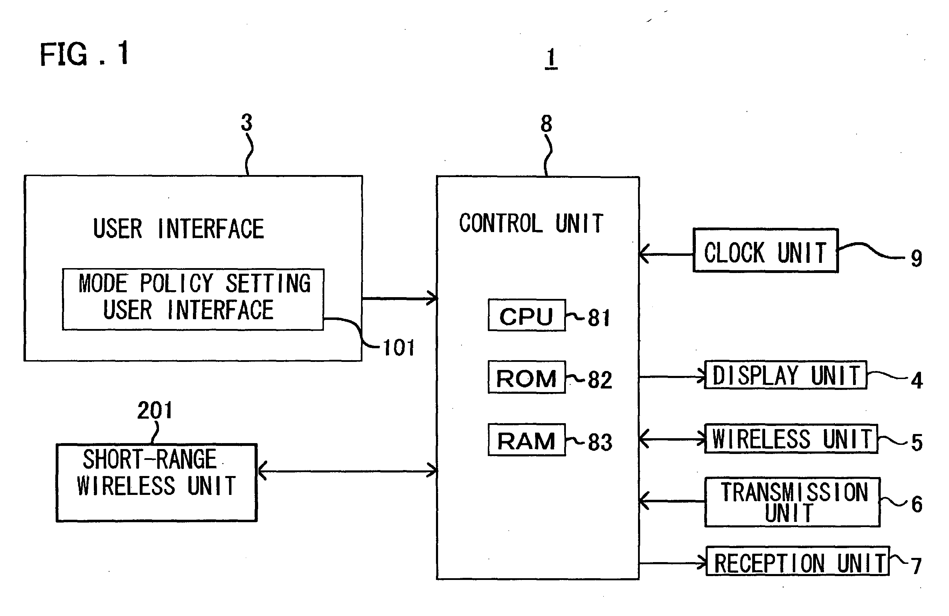

A cellular phone 1 (FIG. 1) in this embodiment allows one of a plurality of standby modes (operation mode) to be set according to a situation when an incoming call is received. More specifically, the standby mode of the cellular phone 1 in this embodiment can be set to one of standby modes, that is, one of the normal mode, the drive mode, the message mode, and the silent mode. In the normal mode, a normal operation is performed to receive an incoming call. In the drive mode, a guidance message saying that "Cannot answer phone while driving" is returned to the sender when an incoming call is received. In the message mode (also referred to as a voice mail mode), the voice mail service center receives and hold a message from the sender on behalf of the receiver. In the silent mode, no ring tone sounds when a call comes in.

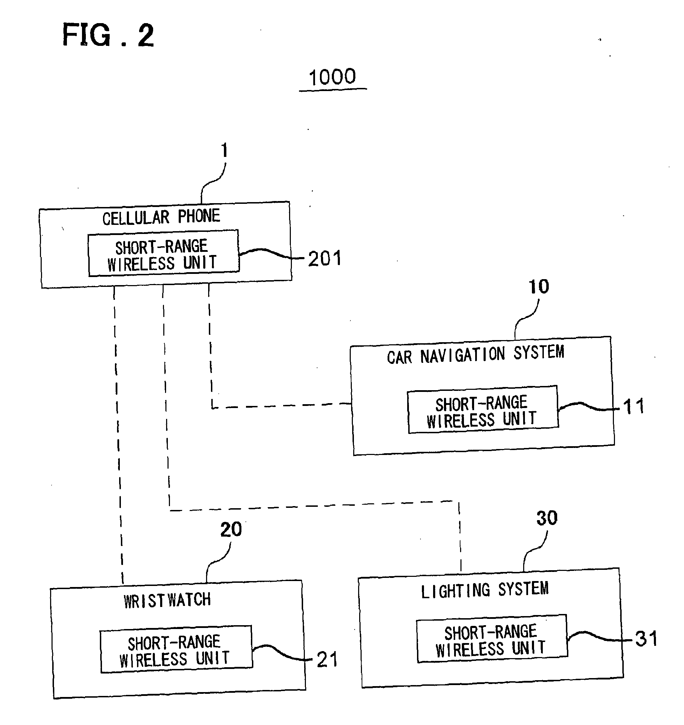

As shown in FIG. 2, the cellular phone 1 in this embodiment is configured so that the cellular phone 1 can perform short-range wireless communication with other devices (hereinafter generically referred to as short-range wireless devices) such as a car navigation system (device installed in a vehicle) 10 provided in a car (vehicle) used by the user, a wristwatch 20(ornamental article) used by the user, or a lighting system 30 (home electric appliances) in the user's home. The cellular phone 1 is configured in such a way that the cellular phone intermittently monitors the status of those short-range (short-distance) wireless devices -- that is, whether a short-range wireless device is within a range where the device is able to perform short-range wireless communication with the cellular phone 1 or in what operation status a short-range wireless device is -- and, according to the status of a short-range wireless device, the standby mode of the cellular phone is automatically set to one of the modes.

The components described above, that is, cellular phone 1, car navigation system 10, wristwatch 20, and lighting system 30, constitute an operation mode determination system 1000 in this embodiment.

The following describes the configuration of the components in the operation mode determination system 1000 more in detail.

As shown in FIG. 1, the cellular phone 1 comprises a user interface 3 that acts as an operation unit used by the user to perform various operations such as the telephone calling operation, the creation and transmission of electronic mail, and the setting operation of a standby mode policy (which will be described later); a display unit 4 that display various information; a wireless unit 5 that sends and receives a wireless signal for information communication (telephone calling or electronic mail transmission and reception) between the cellular phone 1 and an external unit (more specifically, a cellular phone base station); a transmission unit 6 that detects a voice to be transmitted to the other party during telephone calling; a reception unit 7 that outputs a voice received from the other party during telephone calling; a short-range wireless unit 201 that performs short-range wireless communication with other devices located near the cellular phone 1; a clock unit 9 that measures the time of day; and a control unit 8 that integrally controls the components of the cellular phone 1.

The user interface 3 comprises, for example, a plurality of operation keys that are operated by the user. When the user operates one of those operation keys as required, the function assigned to the key is performed under control of the control unit 8. The user interface 3 includes a mode policy setting user interface 101 for setting the standby mode policy that is a policy for determining the standby mode of the cellular phone 1. That is, the user can operate the mode policy setting user interface 101 to enter device information for specifying short-range wireless devices to be monitored, to enter a plurality of conditions for determining the standby mode, and to set the priority of the conditions. That is, the user enters desired device information and conditions and specifies the priorities of the conditions in the order the user desires. As a result, the standby mode policy is registered as a desired setting.

The display unit 4 is, for example, a liquid crystal display on which various types of information are displayed according to the user operation or the calling reception operation.

The wireless unit 5 receives a wireless signal from a base station and demodulates the received wireless signal. The demodulated signal output from the wireless unit 5 is sent to the control unit 8 as the audio signal or the control signal. The audio signal is converted to a voice by the control unit 8 and is output from the reception unit 7 as a voice. The control signal is used in the processing of the control unit 8. The wireless unit 5 also modulates the audio signal or the control signal, received from the control unit 8, into a wireless signal and sends the wireless signal to a base station. The cellular phone 1, which performs wireless communication via the wireless unit 5 in this way, performs information communication such as telephone calling and electronic mail transmission and reception.

The control unit 8 comprises a CPU (Central Processing Unit) 81; a ROM (Read Only Memory) 82; and a RAM (Random Access Memory) 83.

The ROM 82 stores programs and data for use in the operation and the control by the CPU 81.

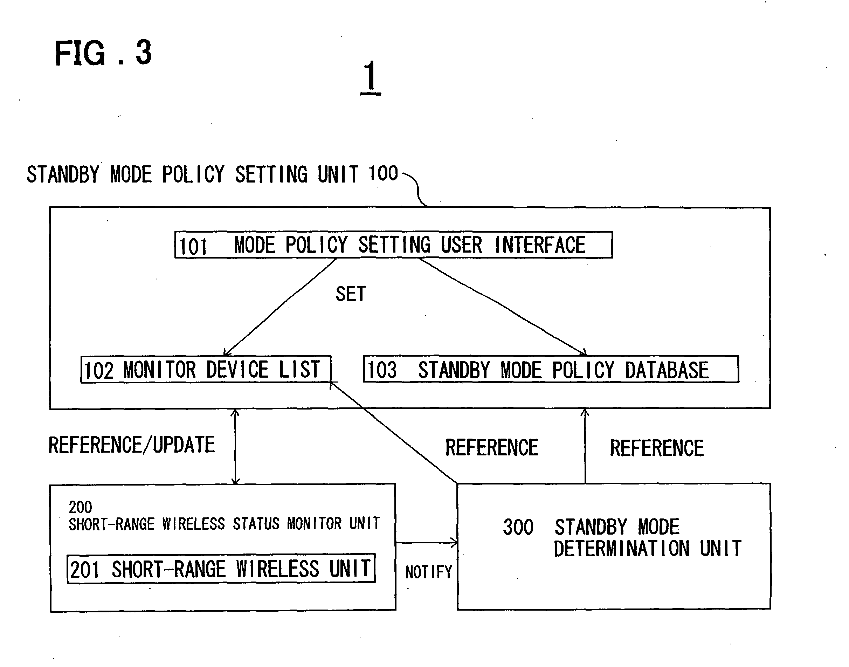

The RAM 83 comprises the work area of the CPU 81; a storage area for storing received data (for example, the data of received mail); a monitor device list 102; and a standby mode policy database 103 (see FIG. 3 for those components).

The monitor device list 102 stores and holds a list of short-range wireless devices (monitored device) specified by the user for monitoring as well as the status of short-range wireless devices to be monitored (device status).

The standby mode policy database 103 is a storage area in which user-entered conditions and their priorities are stored.

The CPU 81, which comprises an operation unit and a control unit, executes the programs stored in the ROM 82 to perform various operations and controls the operations of the display unit 4, wireless unit 5, reception unit 7, and short-range wireless unit 201. The CPU 81 also determines the standby mode according to the standby mode policy and stores data in the monitor device list 102 and the standby mode policy database 103.

The short-range wireless unit 201 comprises short-range wireless communication means that uses Bluetooth (registered trademark No. 4477936: Telefonaktiebolaget LM Ericsson) technology or a wireless LAN.

On the other hand, the car navigation system 10, wristwatch 20, and lighting system 30, which are used as a short-range wireless device, each comprise a short-range wireless unit 11, 21, and 31, which can perform short-range wireless communication with the short-range wireless unit 201 of the cellular phone 1, as shown in FIG. 2.

More specifically, the short-range wireless units 201, 11, 21, and 31 each comprise a Bluetooth-based short-range wireless communication means in this embodiment.

The short-range wireless unit 201 intermittently monitors the status of a short-range wireless device to be monitored (that is, short-range wireless device registered with the monitor device list 102) under control of the control unit 8.

That is, if the short-range wireless unit 11, 21, or 31 of the short-range wireless device 10, 20, or 30 responds to a response request intermittently issued from the short-range wireless unit 201 to a short-range wireless device to be monitored (one of car navigation system 10, wristwatch 20, and lighting system 30), the short-range wireless unit 201 determines that the device to be monitored is within a wireless communication range (within a wireless range) of short-range wireless communication.

By contrast, if the short-range wireless unit 11, 21, or 31 of the short-range wireless device 10, 20, or 30 does not respond, the short-range wireless unit 201 determines that the device to be monitored is out of a wireless communication range (out of a wireless range) of short-range wireless communication.

In particular, when the lighting system 30 responds to a response request, it sends the operation status of the lighting system 30, that is, whether the lighting system 30 is on or off, to the short-range wireless unit 201.

When the Bluetooth technology is used, the short-range wireless unit 201 issues an inquiry. Upon receiving a response request from the short-range wireless unit of a short-range wireless device, the short-range wireless unit 201 connects to the short-range wireless unit and determines that the device is within the wireless range for the period during which the connection is effective. That is, when the Bluetooth technology is used, the short-range wireless unit 201 establishes an ACL link to a short-range wireless unit that responds to an inquiry and determines that the short-range wireless unit is within the wireless range for the period during which the ACL link is established.

During the communication between the short-range wireless unit 201 and the short-range wireless unit 11, 21, or 31, the short-range wireless unit 201 determines with which short-range wireless unit (11, 21, or 31) the wireless communication is being performed, based on the unique information included in the communication contents (unique information allocated to the short-range wireless units 11, 21, and 31; for example, a Bluetooth device address for the Bluetooth technology and a MAC address for a wireless LAN).

As shown in FIG. 3, the components of the cellular phone 1 are classified into primary functions as follows. A standby mode policy setting unit 100 (functional unit used by the user to specify the standby mode policy) comprises the mode policy setting user interface 101, the monitor device list 102, and the standby mode policy database 103. A short-range wireless status monitor unit 200 comprises the short-range wireless unit 201 and the control unit 8 (functional unit that controls the operation of the short-range wireless unit 201). A standby mode determination unit (operation mode determination means; standby mode determination means) 300 comprises the control unit 8 (functional unit that automatically determines the standby mode of the cellular phone 1 based on the monitor result of the short-range wireless status monitor unit 200 and the standby mode policy specified by the user).

The short-range wireless status monitor unit 200 monitors the device status of the short-range wireless devices. When the short-range wireless status monitor unit 200 finds a change in the monitor result, it updates the device status in the monitor device list 102 and notifies the standby mode determination unit 300 that the change was detected in the monitor result (change in the device status).

That is, the short-range wireless status monitor unit 200 intermittently monitors the status of the short-range wireless connection between the short-range wireless unit 201 and the short-range wireless devices as well as the operation status of the short-range wireless devices. When the short-range wireless status monitor unit 200 detects that the status of short-range wireless communication between the cellular phone 1 and a short-range wireless device has changed from the out-of-communication-range status to the within-communication-range status or from the within-communication-range status to the out-of-communication-range status, it updates the device status in the monitor device list 102 according to the change and notifies the standby mode determination unit 300 of the change. The short-range wireless status monitor unit 200 also monitors the operation status of a short-range wireless device (in this embodiment, whether or not the lighting system 30 is on) and, if a change in the operation status is detected, updates the device status in the monitor device list 102 accordingly and notifies the standby mode determination unit 300 of the change.

Upon receiving a notification from the short-range wireless status monitor unit 200 notifying that the device status has changed, the standby mode determination unit 300 determines the standby mode according to the standby mode policy registered with the standby mode policy database 103 and sets the mode to the determined standby mode. That is, when determining the standby mode, the standby mode determination unit 300 references the device status stored in the monitor device list 102 and the conditions and the priorities stored in the standby mode policy database 103 and determines the standby mode according to the referenced information.

Next, the operation will be described in detail.

First, the user of the cellular phone 1 registers a standby mode policy. That is, the user operates the standby mode policy setting user interface 101 of the standby mode policy setting unit 100, as necessary, to enter device information on monitored devices (short-range wireless devices to be monitored) and multiple types of conditions for setting the priority of the conditions. The user-entered device information is stored in the monitor device list 102, and the conditions that determine the conditions for the standby mode and their priorities are stored in the standby mode policy database 103, respectively.

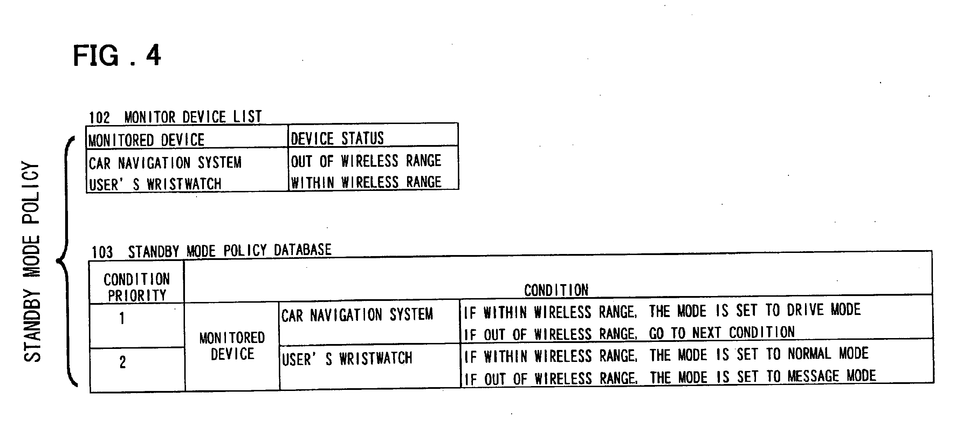

More specifically, when the device information specifying the car navigation system 10 and the wristwatch 20 is entered as the device information, the monitored devices, that is, "car navigation system" and "user's wristwatch", are stored in the monitor device list 102 as the monitored devices as shown in FIG. 4.

Once the device information is specified as described above, the device status of the car navigation system 10 and the wristwatch 20 (for example, information indicating whether or not each monitored device is within the short-range wireless communication range of the short-range wireless unit 201 of the cellular phone 1) is stored as the device status in the monitor device list 102 according to the monitor result of the short-range wireless status monitor unit 200.

The standby mode policy database 103 shown in FIG. 4 shows an example in which the following conditions are entered. The condition specifying that 'if the device "car navigation system" is within wireless range, the mode is set to "drive mode"; if out of wireless range, GO TO NEXT CONDITION' is entered as the first-priority condition. The condition specifying that 'if the device "user's wristwatch" is within wireless range, the mode is set to "normal mode"; if out of wireless range, the mode is set to message mode' is entered as the second-priority condition.

As shown in this example, the conditions vary according to the positional status of the cellular phone 1 (positional relation with other short-range wireless device).

Next, the following describes the operation that is performed when the standby mode policy such as the one shown in FIG. 4 is stored and when the user carrying the cellular phone 1 and wearing the wristwatch 20, which is one of monitored devices, rides in a car having the car navigation system 10 installed therein.

When the user is at a distance longer than a predetermined distance away from the car, the short-range wireless status monitor unit 200 determines that the car navigation system 10 is out of the short-range wireless range but that the wristwatch 20 the user wears is within the short-range wireless range. Therefore, the device status in the monitor device list 102 in this stage is that "'car navigation system" is "out of wireless range" and "user's wristwatch" is "within wireless range"'. In this stage, the standby mode is set to the normal mode.

Next, when the user rides in the car, the short-range wireless status monitor unit 200 determines that both the car navigation system 10 in the car and the wristwatch 20 are within the short-range wireless range. The short-range wireless status monitor unit 200 updates the device status of the "car navigation system" in the monitor device list 102 to "within wireless range" and, at the same time, notifies the standby mode determination unit 300 that the device status has changed.

Upon receiving the notification that the device status has changed, the standby mode determination unit 300 performs the standby mode determination processing in order of the priorities and according to the conditions stored in the standby mode policy database 103. That is, the first-priority condition ('if the device "car navigation system" is within wireless range, the mode is set to "drive mode"; if out of wireless range, GO TO NEXT CONDITION') is selected as the determination condition. In this case, because the "car navigation system" is "within wireless range", the standby mode is set to the drive mode, and the standby mode setting is changed from the normal mode to the drive mode.

Next, when the user gets out of the car and is at a distance longer than a predetermined distance, the short-range wireless status monitor unit 200 updates the device status of "car navigation system" in the monitor device list 102 to "out of wireless range" and, upon receiving the notification, the standby mode determination unit 300 performs the standby mode determination processing again. That is, the first-priority condition ('if the device "car navigation system" is within wireless range, the mode is set to "drive mode"; if out of wireless range, GO TO NEXT CONDITION') is selected first as the determination condition. In this case, because the "car navigation system" is "out of wireless range", the standby mode cannot be determined by the first-priority condition. Then, the next-priority (second) condition ('if the device "user's wristwatch" is within wireless range, the mode is set to "normal mode"; if out of wireless range, the mode is set to message mode') is selected as the determination condition. In this case, because the "user's wristwatch" is "within wireless range", the standby mode is set to the normal mode and the setting of the standby mode is changed from the drive mode to the normal mode.

Next, when the user leaves the cellular phone 1 somewhere and moves away from the cellular phone 1 while wearing the wristwatch 20, the short-range wireless status monitor unit 200 updates the device status of the "user's wristwatch" in the monitor device list 102 from "within wireless range" to "out of wireless range" and, upon receiving the notification, the standby mode determination unit 300 performs the standby mode determination processing. That is, the standby mode determination unit 300 first selects the first-priority condition as the determination condition. However, because the "car navigation system" is "out of wireless range", the second-priority condition is selected as the determination condition. In this case, because the "user's wristwatch" is also "out of wireless range", the standby mode is set to the message mode and the setting of the standby mode is changed from the normal mode to the message mode.

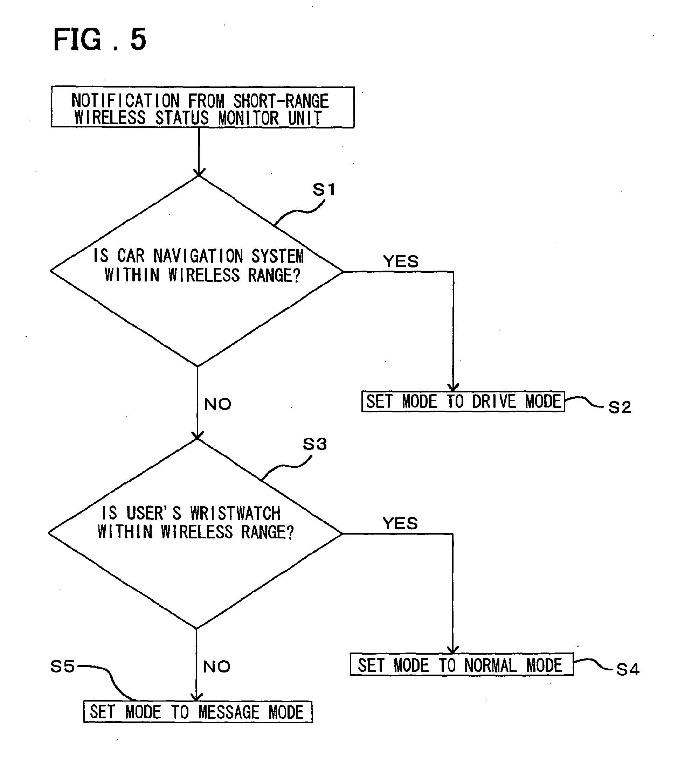

FIG. 5 shows the flowchart of the standby mode determination processing described above.

That is, whether or not the car navigation system 10 is within the short-range wireless communication range of the cellular phone 1 is checked first in step S1 (this is checked by referencing the device status in the monitor device list 102). If it is found that the car navigation system 10 is within the range (YES in step S1), the standby mode is set to the drive mode (step S2).

On the other hand, if it is found in step S1 that the car navigation system 10 is not within the short-range wireless communication range of the cellular phone 1 (NO in step S1), control is passed to step S3.

Whether or not user's wristwatch 20 is within the short-range wireless communication range of the cellular phone 1 is checked in step S3. If it is found that the wristwatch is within the range (YES in step S3), the standby mode is set to the normal mode (step S4).

On the other hand, if it is found in step S3 that the user's wristwatch 20 is not within the short-range wireless communication range of the cellular phone 1 (NO in step S3), the standby mode is set to the message mode (step S5).

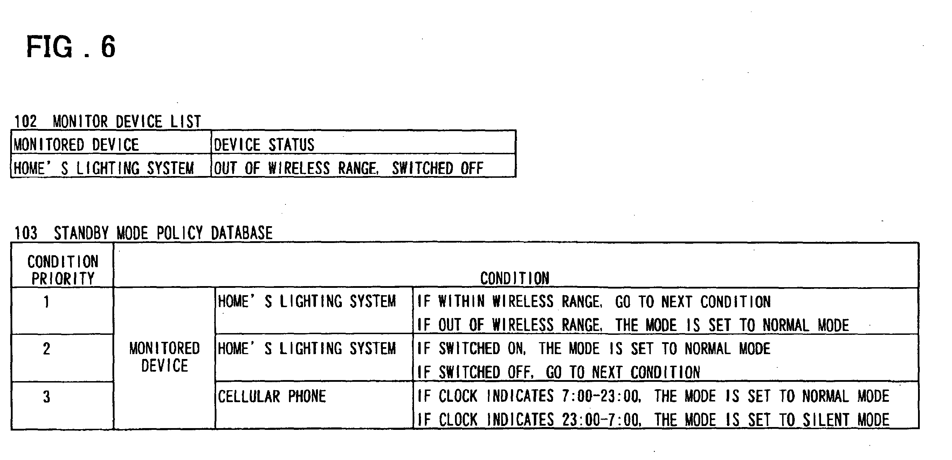

Next, the following describes the operation that is performed when a standby mode policy (FIG. 6) different from that in the example in FIG. 4 is stored.

That is, in the operation example described below, only the home's lighting system is entered as the device information. The monitor device list 102 contains only "home's lighting system" as the monitored device as shown in FIG. 6.

In this case, the information stored as the device information is information not only on whether the lighting system 30 is in the short-range wireless communication range of the cellular phone 1 but also on whether or not the lighting system 30 is on (in what operation status the other devices are). Whether or not the lighting system 30 is on (information on device operation status) is sent from the short-range wireless unit 31 of the lighting system 30 to the short-range wireless unit 201 of the cellular phone 1.

The standby mode policy database 103 shown in FIG. 6 shows an example in which the following conditions are entered. The condition specifying that 'if the device "home's lighting system" is out of wireless range, the mode is set to "normal mode"; if within wireless range, GO TO NEXT CONDITION' is entered as the first-priority condition. The condition specifying that 'if the device "home's lighting system" is on (switched on), the mode is set to "normal mode"; if off (switched off), GO TO NEXT CONDITION' is entered as the second-priority condition. The condition specifying that 'if the clock (clock unit 9) of the device "cellular phone" indicates time 7:00 - 23:00, the mode is set to normal mode; if the clock indicates time 23:00 - 7:00, the mode is set to silent mode' is entered as the third-priority condition.

As shown in this example, the conditions include a condition that varies according to the time measured by the cellular phone 1 (third-priority condition).

The following describes the operation that is performed when the standby mode policy such as the one shown in FIG. 6 is stored and when the user carrying the cellular phone 1 comes back home.

First, when the user is away from home, the short-range wireless status monitor unit 200 determines that the lighting system 30 is out of the short-range wireless range. Therefore, the device status in the monitor device list 102 in this stage is that '"home's lighting system" is "out of wireless range" and "light switched off"' and the standby mode in this stage is set to the normal mode.

Next, when the user comes back home and switches on the lighting system 30, the short-range wireless status monitor unit 200 determines that the lighting system 30 is within the short-range wireless range and is on, updates the device status of "home's lighting system" in the monitor device list 102 to "within wireless range" and "switched on" and, at the same time, notifies the standby mode determination unit 300 that the device status has changed. Upon receiving the notification notifying that the device status has changed, the standby mode determination unit 300 performs the standby mode determination processing. That is, the first-priority condition ('if the device "home's lighting system" is out of wireless range, the mode is set to "normal mode"; if within wireless range, GO TO NEXT CONDITION') is selected as the determination condition. In this case, because "home's lighting system" is "within wireless range", the standby mode cannot be determined by the first-priority condition and the second-priority condition ('if the device "home's lighting system" is switched on, the mode is set to "normal mode"; if switched off, GO TO NEXT CONDITION') is selected as the determination condition. In this case, because "home's lighting system" is "switched on", the standby mode is set to the normal mode and the setting of the standby mode remains the normal mode.

Next, when the user goes to bed and switches off the lighting system 30, the short-range wireless status monitor unit 200 determines that the lighting system 30 is within the short-range wireless range and is off, updates the device status of "home's lighting system" in the monitor device list 102 to "within wireless range" and "switched off" and, at the same time, notifies the standby mode determination unit 300 that the device status has changed. Upon receiving the notification notifying that the device status has changed, the standby mode determination unit 300 performs the standby mode determination processing. That is, the first-priority condition is selected first as the determination condition. In this case, because "home's lighting system" is "within wireless range", the standby mode cannot be determined by the first-priority condition and therefore the second-priority condition is selected as the determination condition. In this case, because "home's lighting system" is "switched off", the standby mode cannot be determined by the second-priority condition either and the third-priority condition is selected as the determination condition. That is, the current time of day is obtained from the clock unit 9 and whether the standby mode is set to the silent mode or to the normal mode is determined according to the obtained time. More specifically, the mode is set to the normal mode if the time of day is 7:00-23:00, and to the silent mode if the time of day is 23:00-7:00. Therefore, if the user goes to bed after 23:00 and the lighting system 30 is switched off, the mode is set to the silent mode.

At 7:00 in the next morning, the standby mode is changed automatically to the normal mode (with the third-priority condition as the determination condition).

If the user of the cellular phone 1 is still away from home at the time to move to the silent mode (for example, 23:00) that is set by the third-priority condition or if the user is at home but the lighting system 30 is on, that is, the user is still awake (does not go to sleep), the mode is not set to the silent mode but remains the normal mode according to the first- and second-priority condition.

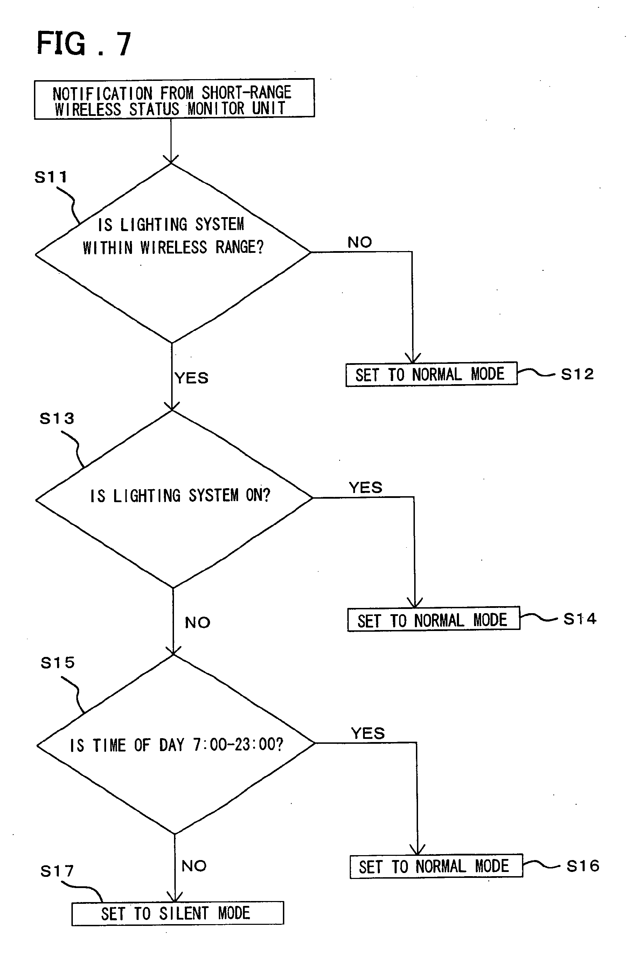

Next, with reference to the flowchart in FIG. 7, the following describes the standby mode determination processing executed by the standby mode determination unit 300 when the standby mode policy shown in FIG. 6 is stored.

As shown in FIG. 7, whether or not the lighting system 30 (home's lighting system) is within the short-range wireless communication range of the cellular phone 1 is checked first in step S11. If it is found that the lighting system is not within the range (out of the range) (NO in step S11), the standby mode is set to the normal mode (step S12).

On the other hand, if it is found in step S11 that the lighting system 30 is within the short-range wireless communication range of the cellular phone 1 (YES in step S11), control is passed to step S13.

In step S13, whether or not the lighting system 30 is on is checked. If it is found that the lighting system 30 is on (YES in step S13), the standby mode is set to the normal mode (step S14).

On the other hand, if it is found in step S13 that the lighting system 30 is not on (NO in step S13), control is passed to step S15.

In step S15, whether the time of day indicated by the clock unit 9 is between 7:00 and 23:00 is checked. If it is found that the time of day is between 7:00 and 23:00 (YES in step S15), the standby mode is set to the normal mode (step S16).

On the other hand, if it is found in step S16 that the time of day is not between 7:00 and 23:00 (NO in step S15), control is passed to step S17 and the standby mode is set to silent mode (step S17).

According to the embodiments described above, the cellular phone 1 comprises the standby mode determination unit 300 that selectively determines the standby mode using one of a plurality of conditions, which vary according to the status of the cellular phone 1, as the determination condition. The standby mode determination unit 300 determines the operation mode using one of the plurality of conditions as the determination condition in order of priority. If the operation mode cannot be determined by a higher priority condition, a next lower priority condition is used as the determination condition. Therefore, the standby mode can be determined as necessary according to the complicated status in which the cellular phone 1 is placed.

More specifically, the standby mode is determined using determination conditions such as whether or not the cellular phone 1 is positioned in a range where it can perform short-range wireless communication with a short-range wireless device (car navigation system 10, wristwatch 20, lighting system 30), the operation status of the lighting system 30 positioned in a range where short-range wireless communication is possible, and whether or not the clock unit 9 has measured a predetermined time of day. This means that the operation mode can be determined without requiring the user to take a positive action.

In particular, because the cellular phone 1 intermittently determines if it is in a range where short-range wireless communication can be performed with the car navigation system 10, the wristwatch 20, and the lighting system 30, the standby mode can be determined more advantageously.

In addition, the user can specify a plurality of conditions that will be used as determination conditions and the priorities of those conditions and, at the same time, specify other devices (monitored devices) with which short-range wireless communication is to be performed. This enables the user to take action even when the user-requested "conditions to be used as standby mode determination conditions" change.

Although only the cellular phone 1 has been described as an example of the portable information terminal of the present invention in the above embodiments, the present invention is not limited to the cellular phone 1 but may also be applied to other portable information terminals such as a PHS and a Personal Digital Assistant (PDA).

Although only the standby mode has been described as the operation mode in the above embodiments, the present invention may also be applied to an operation mode other than the standby mode. For example, if the cellular phone 1 is out of the wireless range of home's lighting system 30, the backlight of the display unit 4 is put in the on status (for example, the backlight is turned on only when the user operates the cellular phone or an incoming call is received). On the other hand, if the cellular phone 1 is within the wireless range of the lighting system 30, the cellular phone 1 checks the operation status of the lighting system 30; the backlight is put in the off status (the backlight is always off even when the user operates the cellular phone or an incoming call is received) if the lighting system 30 is on, and in the on status if the lighting system 30 is off.

Although the car navigation system 10 is described as an example of a device installed in a car, other devices (for example, audio equipment, a car accessory powered by a cigarette lighter, or a device that wirelessly opens or closes the key of a car) may also be used.

Although the wristwatch 20 is described as an example of an ornamental article, other ornamental articles may also be used. The user can also obtain the same effect as that described above by carrying a short-range wireless device, capable of performing short-range wireless communication with the short-range wireless unit 201, in user's pocket.

In addition, although the lighting system 30 has been described as an example of home electric appliances, other home electric appliances may also be used.
It should be noted that other objects, features and aspects of the present invention will become apparent in the entire disclosure and that modifications from the disclosed embodiments may be done without departing the scope of the present invention claimed as appended herewith.
Also it should be noted that any combination of the disclosed and/or claimed elements, matters and/or items may fall under the modifications aforementioned.

## Claims

1. A portable information terminal, which operates in one of a plurality of operation modes, **characterized by** comprising:
operation mode determination means for determining an operation mode from a plurality of operation modes using one of a plurality of conditions as a determination condition, said plurality of conditions varying according to a status of said portable information terminal,
wherein said operation mode determination means determines the operation mode from the plurality of operation modes using one of said plurality of conditions as the determination condition in order of priority and, if the operation mode cannot be determined by a higher priority condition, using a next lower priority condition as the determination condition.

2. The portable information terminal as defined in claim 1 wherein the plurality of conditions are conditions that vary according to positional or temporal status.

3. The portable information terminal as defined in claim 2 wherein said at least one of the plurality of conditions is whether or not said portable information terminal is in a position where short-range wireless communication can be performed with some other device.

4. The portable information terminal as defined in claim 3 wherein said at least one of the plurality of conditions is an operation status of some other device positioned in a range where said portable information terminal can perform short-range wireless communication.

5. The portable information terminal as defined in claim 3 or 4 wherein said other device is a plurality of devices.

6. The portable information terminal as defined in one of claims 3-5 wherein said other device includes a device installed in a vehicle.

7. The portable information terminal as defined in one of claims 3-6 wherein said other device includes an ornamental article.

8. The portable information terminal as defined in claim 7 wherein said ornamental article is a wristwatch.

9. The portable information terminal as defined in one of claims 3-8 wherein said other device includes a home electric appliance.

10. The portable information terminal as defined in claim 9 wherein said home electric appliance is a lighting system.

11. The portable information terminal as defined in claim 10 wherein said at least one of the plurality of conditions is whether or not an operation status of said lighting system is on.

12. The portable information terminal as defined in one of claims 2-11, further comprising:
clocking means for measuring a time of day or a period of time
wherein said at least one of the plurality of conditions is whether or not the clocking means measures a predetermined time of day or a predetermined time.

13. The portable information terminal as defined in one of claims 1-12 wherein a user can set the plurality of conditions.

14. The portable information terminal as defined in one of claims 1-13 wherein a user can set the priority.

15. The portable information terminal operating in one of a plurality of operation modes, comprising:
operation mode determination means for intermittently determining whether or not said portable information terminal is positioned in a range where short-range wireless communication can be performed with some other device and, based on the determination result, determining the operation mode from a plurality of operation modes.

16. The portable information terminal as defined in claim 15 wherein a user can specify said other device.

17. The portable information terminal as defined in one of claims 1-16
wherein the plurality of operation modes include a plurality of standby modes and
said operation mode determination means comprises standby mode determination means for determining the standby mode from the plurality of standby modes.

18. The portable information terminal as defined in one of claims 1-17 wherein said portable information terminal is a cellular phone.

19. A system for determining an operation mode of a portable information terminal operating in one of a plurality of operation modes, comprising:
the portable information terminal as defined in one of claims 3-18; and
a device that can perform short-range wireless communication with said portable information terminal.

20. A system for determining an operation mode of a portable information terminal operating in one of a plurality of operation modes, comprising:
the portable information terminal as defined in claim 4; and
a device that can perform short-range wireless communication with said portable information terminal,
wherein said device can transmit information on an operation status of said device to said portable information terminal.
